**Europäisches Patentamt**

**European Patent Office**

**Office européen des brevets**

(19)

(11) Veröffentlichungsnummer: **0 011 167 B1**

(12)

# EUROPÄISCHE PATENTSCHRIFT

(45) Veröffentlichungstag der Patentschrift:
**10.03.82**

(21) Anmeldenummer: **79104172.6**

(22) Anmeldetag: **29.10.79**

(51) Int. Cl.³: **G 01 L 23/32, G 01 L 19/10, G 01 L 7/04, G 01 D 1/12, G 01 D 15/22**

(54) Verfahren und Vorrichtung zum Aufzeichnen des Kompressionsdruckes von Verbrennungsmotoren.

(30) Priorität: **09.11.78 DE 2848613**

(43) Veröffentlichungstag der Anmeldung:
**28.05.80 Patentblatt 80/11**

(45) Bekanntmachung des Hinweises auf die Patenterteilung:
**10.03.82 Patentblatt 82/10**

(84) Benannte Vertragsstaaten:
**CH FR GB IT NL SE**

(56) Entgegenhaltungen:
**DE-B-1 100 329**

(73) Patentinhaber: **VDO Adolf Schindling AG, Gräfstrasse 103, D-6000 Frankfurt/Main (DE)**

(72) Erfinder: **Koch, Peter Helmut, Kurhessenstrasse 72, D-6000 Frankfurt/Main 50 (DE)**
Erfinder: **Friebe, Bernhard Helmut, Im Grund 6, D-6251 Runkel 7 (DE)**

(74) Vertreter: **Könekamp, Herbert, Dipl.-Ing., Sodener Strasse 9, D-6231 Schwalbach (DE)**

## Verfahren und Vorrichtung zum Aufzeichnen des Kompressionsdruckes von Verbrennungsmotoren

Die Erfindung bezieht sich auf ein Verfahren zum Aufzeichnen des Kompressionsdruckes von Verbrennungsmotoren, bei dem ein Schreibstift und ein Aufzeichnungsblatt durch ein druckempfindliches Organ, insbesondere eine Bourdonfeder, relativ zueinander druckabhängig bewegt werden und während eines Teils der Bewegung in Berührung miteinander gebracht werden, sowie auf eine Vorrichtung zur Ausübung des Verfahrens.

Zum Aufzeichnen des Kompressionsdruckes wird bei einem bekannten Verfahren der das Aufzeichnungsblatt berührende Stift während des Komprimiervorganges druckabhängig ausgelenkt und zeichnet auf diese Weise eine Kurve auf, die beim maximal erreichbaren Kompressionsdruck endet. Zur Ausübung dieses Verfahrens ist eine Vorrichtung bekannt, die eine in einem Gehäuse untergebrachte Bourdonfeder enthält, die über eine Meßleitung mit einer Zündkerzenöffnung eines Verbrennungsmotors verbunden werden kann. Mit der Bourdonfeder steht ein Schreibstift in Wirkverbindung. In dem Gehäuse befindet sich ein Träger für das Aufzeichnungsblatt. Das Aufzeichnungsblatt und der Träger sind dabei ortsfest in bezug auf das Gehäuse angeordnet. Der durch die Bourdonfeder entsprechend dem in ihr herrschenden Druck auslenkbare Schreibstift ist zum Schreiben einer Schreibspur über dem Aufzeichnungsblatt beweglich. Der Schreibstift wird nach dem Aufspannen des Aufzeichnungsblattes auf dem Träger auf dem Aufzeichnungsblatt zur Auflage gebracht. Wenn anschließend durch den Kompressionsdruck der Schreibstift ausgelenkt wird, schreibt dieser die Schreibspur auf das Aufzeichnungsblatt. Anschließend wird der Schreibstift wieder in seine Ausgangsstellung zurückgestellt, indem die Bourdonfeder entlüftet wird.

Es ist des weiteren eine Vorrichtung bekannt (DE-AS 1 100 329), bei der die Bourdonfeder mit einem das Aufzeichnungsblatt aufnehmenden, drehbar gelagerten Träger in Wirkverbindung steht und der Schreibstift in verschiedene Stellungen verschwenkbar am Gehäuse der Vorrichtung gelagert ist. Bei dieser Vorrichtung wird nach dem Aufspannen des Aufzeichnungsblattes auf dem Träger der Schreibstift in eine erste Stellung verschwenkt und danach die Messung durchgeführt, bei der der Träger mit dem Aufzeichnungsblatt unter dem Schreibstift hinwegbewegt und eine Kurve aufgezeichnet wird. Danach wird durch Belüften der Bourdonfeder der Träger mit dem Aufzeichnungsblatt in seine Ausgangsstellung zurückgedreht und der Schreibstift in seine nächste Aufzeichnungsstellung relativ zum Träger verschwenkt. Nunmehr kann eine neue Messung beginnen.

Diese bekannten Vorrichtungen, im allgemeinen als Kompressionsdruckschreiber bezeichnet, wurden bisher in zwei Ausführungsarten verwendet, und zwar einmal mit einem Meßbereich von etwa 2 bis 12 kp/cm² für Ottomotoren und zum anderen mit einem Meßbereich von etwa 10—40 kp/cm² für Dieselmotoren. Zur Prüfung beider Motorenarten war es notwendig, zwei Kompressionsdruckschreiber mit unterschiedlichen Meßbereichen bereitzuhalten. Desgleichen mußten für beide Meßbereiche unterschiedliche Aufzeichnungsblätter verwendet werden. Diese Unterteilung in zwei Meßbereiche ist aus Gründen der Aufzeichnungsgenauigkeit erforderlich. Durch die Reibung des Schreibstiftes auf dem Aufzeichnungsblatt während des Komprimiervorganges ergibt sich nämlich in Verbindung mit einem einzigen Meßbereich für beide Motorenarten eine nicht mehr akzeptable Anzeigegenauigkeit. Bei einer Meßbereichsunterteilung läßt sich diese auf etwa 5% verbessern. Diese Unterteilung verursacht nicht nur verhältnismäßig große Aufwendungen, wenn der Kompressionsdruck wahlweise von Dieselmotoren und Ottomotoren registriert werden soll, sondern es gestaltet sich auch die Registrierung selbst umständlicher, da zunächst der richtige Kompressionsdruckschreiber bereitzustellen und mit dem zutreffenden Aufzeichnungsblatt zu versehen ist.

Diese Nachteile sollen durch die Erfindung beseitigt werden. Es ist daher Aufgabe der Erfindung, ein Meßverfahren zu konzipieren, das die Aufzeichnung des Kompressionsdruckes sowohl von Ottomotoren als auch von Dieselmotoren und gegebenenfalls anderer Motorenarten mit hoher Genauigkeit in einem einzigen Meßbereich gestattet.

Diese Aufgabe wird ausgehend von dem eingangs beschriebenen Verfahren erfindungsgemäß dadurch gelöst, daß zuerst durch Beaufschlagung des Organs mit dem Kompressionsdruck eines der beiden Aufzeichnungselemente aus seiner Ruhelage in die durch den Kompressionsdruck gegebene Maximallage verschwenkt wird, dann die beiden Aufzeichnungselemente miteinander in Berührung gebracht werden und schließlich durch Entlüften des Organs das ausgelenkte Aufzeichnungselement unter Erzeugung einer Schreibspur in seine Ruhelage verschwenkt wird.

Bei diesem erfindungsgemäßen Verfahren wird die Meßgenauigkeit dadurch wesentlich erhöht, daß während des Auslenkens des druckempfindlichen Organs bzw. der Bourdonfeder und des mit ihm in Wirkverbindung stehenden Aufzeichnungselements keine Reibung zwischen den beiden Aufzeichnungselementen auftritt. Erst wenn die endgültige Auslenkung entsprechend dem Kompressionsdruck erreicht ist, aber bevor das ausgelenkte Aufzeichnungselement in seine Anfangslage zurückgestellt wird, werden beide Aufzeichnungselemente miteinander in Berührung gebracht. Bei der Rückstellung des ausgelenkten Aufzeichnungselements wird dann eine Meßkurve aufgezeichnet. Bei diesem Vorgang kann die Reibung zwischen dem Schreibstift und dem Aufzeichnungsblatt die Meßgenauigkeit nicht mehr in relevantem Maße beeinflussen, da der Nullpunkt des Aufzeichnungsblattes entsprechend der Ausgangsstellung des Aufzeichnungsblattträgers festliegt. Auf diese Weise kann in einem einzigen Meßbereich, der sich beispielsweise von 1,5 bar bis 50 bar erstreckt, eine größere Genauigkeit als bei dem herkömmlichen Verfahren erreicht werden.

Gemäß einer vorteilhaften Ausführungsform der Erfindung wird das Aufzeichnungsblatt druckabhängig ausgelenkt. An und für sich ist es auch möglich, den Schreibstift druckabhängig auszulenken und das Aufzeichnungsblatt feststehend anzuordnen, jedoch ist diese Alternative gerätetechnisch ungünstiger zu realisieren.

Ein weiterer Gedanke der Erfindung bezieht sich auf eine Vorrichtung zur Ausübung des erfindungsgemäßen Verfahrens. Die Vorrichtung besteht in bekannter Weise aus einem Träger für das Aufzeichnungsblatt, einem auf das Aufzeichnungsblatt aufsetzbaren Schreibstift, der an einem Schreibarm angeordnet ist, und einem druckempfindlichen Organ, insbesondere einer Bourdonfeder, das mit dem Träger in Wirkverbindung steht. Die Vorrichtung unterscheidet sich von den bisher bekannten dadurch, daß der den Schreibstift tragende Schreibarm an einer zum Schreibstift achsparallel und gegen die Kraft einer Feder verschiebbaren Stange sitzt, die ein Kurvengleitstück aufweist, und daß zum Entlüften des druckempfindlichen Organs ein Ventil vorhanden ist, dessen bewegliches Verschlußelement durch das Kurvengleitstück dergestalt betätigbar ist, daß das Ventil beim Aufsetzen des Schreibstifts auf das Aufzeichnungsblatt in eine Entlüftungsstellung geschaltet ist.

Durch die Feder wird der Schreibarm außer beim Rücklauf des ausgelenkten Aufzeichnungsblattträgers in seine Ausgangsstellung von dem Aufzeichnungsblatt so entfernt gehalten, daß der Schreibstift das Aufzeichnungsblatt nicht erreicht. Die Feder kann, wie noch beschrieben wird, außerdem dazu vorgesehen sein, den Schreibarm noch weiter von dem Aufzeichnungsblattträger wegzudrücken, so daß das Aufzeichnungsblatt bequem auf den Aufzeichnungsblattträger aufgelegt werden kann. Zur selbsttätigen Auslösung des Rücklaufs des Aufzeichnungsblattträgers durch Andrücken des Schreibstifts mittels des Schreibarms ist dieser Schreibarm über eine Stange mit dem Ventil gekoppelt, um dieses in der niedergedrückten Stellung des Schreibarms in seine Entlüftungsstellung zu schalten. Hierzu weist die Stange das Kurvengleitstück auf, das über dem verschiebbaren Stift das Ventil betätigt. Ist das Ventil in seine Entlüftungsstellung geschaltet, wird der ausgelenkte Träger durch die Federkraft der Bourdonfeder in seine Ausgangslage selbsttätig zurückgedreht. Das Meßergebnis wird dabei nicht durch einen allmählichen Druckabfall in der Bourdonfeder bei noch nicht auf dem Aufzeichnungsblatt aufsitzenden Schreibstift verfälscht.

In weiterer Ausgestaltung der Vorrichtung besteht der Träger für das Aufzeichnungsblatt am zweckmäßigsten aus einer drehbar gelagerten Scheibe, die mit dem druckempfindlichen Organ gekuppelt ist. Bei einer Vorrichtung mit einer Bourdonfeder kann diese Wirkverbindung in vorteilhafter Weise dadurch realisiert sein, daß die Bourdonfeder mit einem Segmentwerk gekuppelt ist, auf dessen Ausgangswelle die Scheibe sitzt. Eine solche Ausführungsform besitzt einen besonders kompakten Aufbau. Darüber hinaus besteht die Möglichkeit, Baugruppen und Teile üblicher Bourdonfedermanometer für die Vorrichtung verwenden zu können. Zur einwandfreien, unverdrehbaren Festlegung des Aufzeichnungsblattes auf der Scheibe steht am zweckmäßigsten aus deren Mitte ein schlüsselförmiger Zapfen hervor, auf den ein mit einer Schlüssellochöffnung versehenes kreisförmiges Aufzeichnungsblatt aufschiebbar ist.

Bei dieser Ausführungsform kann bei kompakten Abmessungen der Vorrichtung ein vergleichsweise großer Auslenkweg vorgesehen werden. Die Lagerung des Aufzeichnungsblattträgers, welche auch die Genauigkeit der Vorrichtung mitbestimmt, kann als drehbare Lagerung bei vergleichsweise geringem Aufwand präzise ausgeführt werden. Durch den schlüsselförmigen Zapfen, der in eine Schlüssellochöffnung des kreisförmigen Meßblattes eingreift, wird das Aufzeichnungsblatt zu dem Aufzeichnungsblattträger genau ausgerichtet.

In einer Weiterbildung der voranstehend beschriebenen Ausführungsform weist die Vorrichtung das Merkmal auf, daß an einem Ende der Stange Rastmittel angeordnet sind, bei deren Lösen der Schreibarm durch die Feder in eine das Einlegen eines Aufzeichnungsblattes erleichternde Position verfahrbar ist.

Dabei wird also der Schreibarm nur zum Einlegen eines Aufzeichnungsblattes besonders weit von dem Träger weggedrückt, während er durch die gleiche Feder normalerweise, solange der Träger nicht in seine Ausgangsstellung zurücklaufen soll, in einem geringeren Abstand zu dem Träger gehalten wird. Diese Ausbildung der Vorrichtung läßt eine bequeme Handhabung zu und ist kompakt und wenig aufwendig.

Eine weitere Verbesserung der Handhabung kann dadurch erreicht werden, daß der Schreibarm zum Einlegen des Aufzeichnungsblattes von dem Aufzeichnungsblattträger wegschwenkbar ist.

Bevorzugt ist der Schreibstift auf dem Schreibarm in mehrere Schreibstellungen verschiebbar. Dadurch können die Kompressionsdrücke, die für mehrere Zylinder eines Motors registriert werden und miteinander verglichen werden sollen, in wenig aufwendiger Weise auf das Aufzeichnungsblatt geschrieben werden. Dazu wird nach jeder Messung der Schreibstift auf eine neue Schreibspur in einem anderen radialen Abstand zu der Drehachse des Aufzeich-

nungsblattträgers eingestellt.

Bevorzugt weist der Träger ringförmige Erhebungen zwischen den Schreibstellungen des Schreibstifts auf, auf denen das Aufzeichnungsblatt aufliegt. Durch die elastische Nachgiebigkeit des Aufzeichnungsblattes zwischen den ringförmigen Erhebungen wird erreicht, daß der Schreibstift unter genügendem, aber nicht zu großem Druck an dem Aufzeichnungsblatt aufliegt.

Zusätzlich oder auch statt dessen kann der Schreibstift zweckmäßig an dem Schreibarm senkrecht zur Aufzeichnungsblattebene federnd gelagert sein, um den gewünschten Schreibdruck einzustellen und ein Verkeilen des Schreibstifts gegenüber dem Aufzeichnungsblatt zu verhindern.

Eine weitere zweckmäßige Ausgestaltung der Vorrichtung besteht darin, daß eine über dem Schreibarm angeordnete Sichtscheibe fest mit dem Schreibarm verbunden ist. Durch diese kompakte Anordnung kann auch die Bedienung besonders bequem gestaltet werden, da der Rücklauf in diesem Fall durch Niederdrücken irgendeiner Stelle der Sichtscheibe bewirkt wird, also keine große Aufmerksamkeit der Bedienungsperson erfordert.

Besonders vorteilhaft ist es, den Schreibarm durch ein in der Sichtscheibe angeordnetes, radial verlaufendes Langloch zu substituieren, in dem der Schreibstift längsverschieblich gelagert ist. Eine solche Ausführungsform bietet neben den vorerwähnten Bedienungsvorteilen auch fertigungstechnische Vorteile.

Die Erfindung sei an Hand der Zeichnung, die in zum Teil schematischer Darstellung ein Ausführungsbeispiel enthält, näher erläutert. Es zeigt

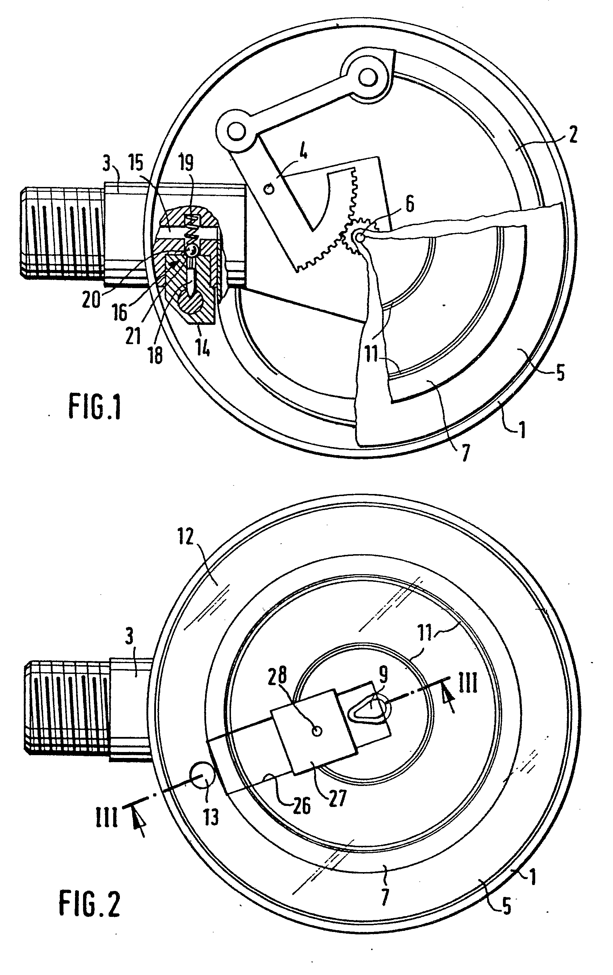

Figur 1 eine Aufsicht auf die Vorrichtung mit abgenommenem Deckel und Zwischenboden,

Figur 2 eine Aufsicht auf die Vorrichtung nach Figur 1 mit aufgesetztem Deckel und Zwischenboden,

Figur 3 einen Schnitt durch die Vorrichtung nach Figur 2 entlang der Linie III-III und

Figur 4 ein in Verbindung mit der Vorrichtung vorgesehenes Aufzeichnungsblatt.

In einem Gehäuse 1 befindet sich eine Bourdonfeder 2, die an einem Ende an einem Anschlußstutzen 3 angelötet ist und an ihrem anderen, verschlossenen Ende mit einem Segmentwerk 4 in Wirkverbindung steht. Die Bourdonfeder 2 und das Segmentwerk 4 sind nach vorne durch einen Zwischenboden 5 abgedeckt. Durch diesen Zwischenboden 5 ragt die Ausgangswelle 6 des Segmentwerks 4, auf der der kreisförmige Träger 7 für das Aufzeichnungsblatt 8 sitzt. Auf dem Träger 7 befindet sich ein schlüsselförmiger Zapfen 9, der mit einer entsprechenden Schlüssellochöffnung 10 im Aufzeichnungsblatt 8 korrespondiert.

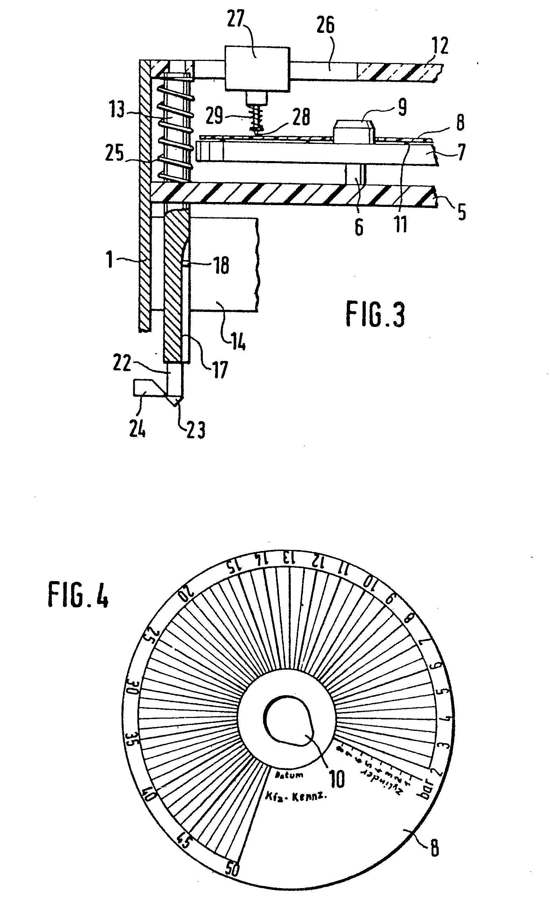

Wie aus Figur 4 ersichtlich ist, weist das Aufzeichnungsblatt 8 radial gerichtete Striche einer Skala der Kompressionsdrücke auf, sowie Markierungen in unterschiedlichem radialen Abstand für die einzelnen Zylinder, deren Kompressionsdrücke gemessen werden sollen. In einem radialen Abstand, der zwischen diesen Markierungen für die Zylinder liegt, ragen aus dem Träger 7 konzentrische ringförmige Erhebungen 11, auf denen das Aufzeichnungsblatt 8 aufliegt.

Das Gehäuse 1 ist nach vorne durch eine Sichtscheibe 12 abgedeckt, die exzentrisch an einer Stange 13 befestigt ist. Die Stange 13 ist axial verschieblich in einer Halterung 14 am Anschlußstutzen 3 gelagert, der die Zufuhrleitung 15 für das Bourdonrohr 2 sowie ein Entlüftungsventil 16 enthält. Dieses Entlüftungsventil 16 wird über ein Kurvengleitstück 17 an der Stange 13 betätigt. An das Kurvengleitstück 17 ist ein verschiebbarer Stift 18 unter der Kraft einer Druckfeder 19 angedrückt. Dabei ist zwischen dem Stift und der Druckfeder eine Kugel 20 angeordnet, die durch die Druckfeder 19 in der Ruhestellung an einen Bund 21 zum luftdichten Abschluß der Zufuhrleitung an dieser Stelle gedrückt wird. In der Entlüftungsstellung wird die Kugel 20 entgegen der Kraft der Druckfeder 19 durch den Stift 18 angehoben, wenn die Stange 13 mit dem Kurvengleitstück 17 nach unten (Figur 3) geschoben wird.

An einem Ende 22 ist die Stange mit Rastmitteln 23 versehen, zu denen eine senkrecht zu der Stange angeordnete und verschiebbare Klinke 24 gehört. Zwischen dem Zwischenboden 5 und der Sichtscheibe 12 ist eine Druckfeder 25 vorhanden, die auf der Stange 13 sitzt und die Sichtscheibe 12 in einer Normalstellung hält.

In der Sichtscheibe 12 befindet sich ein radial verlaufendes Langloch 26, in dem eine Halterung 27 für den Schreibstift 28 verschieblich gelagert und in bestimmten Stellungen rastend gehalten ist. Durch die Halterung 27 kann der Schreibstift 28 auf verschiedene Spuren entsprechend den Markierungen für die Zylinder auf dem Aufzeichnungsblatt 8 eingestellt werden. Der Schreibstift 28 ist gegen die Kraft einer Feder 29 axial verschieblich an der Halterung 27 befestigt.

Zur Registrierung des Kompressionsdruckes eines Zylinders wird zunächst ein Aufzeichnungsblatt auf den Träger 7 aufgelegt. Hierzu wird die Klinke 24 der Rastmittel nach links gezogen, wodurch die Sichtscheibe 12 mit dem Schreibstift 28 unter der Kraft der Feder 25 weit nach oben gedrückt wird und gegebenenfalls um die Längsachse der Stange 13 verschwenkt werden kann, so daß das Aufzeichnungsblatt leicht aufgelegt werden kann. Danach wird die Sichtscheibe 12 wieder in die gezeichnete Stellung gebracht, in der sie durch die Rastmittel gehalten ist.

Anschließend kann die Vorrichtung unter Zwischenschaltung eines nicht dargestellten Rückschlagventils auf eine Zündkerzenöffnung des Motors aufgesetzt werden, so daß durch Betätigung des Anlassers des Motors über die Zufuhrleitung 15 bei geschlossenem Ventil 16 die Luft in der Bourdonfeder komprimiert wird.

Dadurch lenkt die Bourdonfeder den Träger 7 aus und zwar bis in eine Stellung, die dem Kompressionsdruck dieses Zylinders entspricht. Während dieser Drehung des Trägers 7 ist der Schreibstift 28 von dem Aufzeichnungsblatt 8 abgehoben. Ist die Endstellung, die den Kompressionsdruck angibt, erreicht, so wird der Schreibstift 28 durch Druck auf die Sichtscheibe 12 niedergedrückt, so daß er zur federnden Anlage an der Oberfläche des Aufzeichnungsblattes 8 gelangt. In dieser Stellung wird dann zugleich der Stift 18 nach rechts (Figur 3) gedrückt, wodurch die Kugel 20 des Ventils 16 in die Entlüftungsstellung gebracht wird. Bei dem daraufhin eintretenden Druckabfall dreht die Bourdonfeder den Träger 7 infolge der Federkraft der Bourdonfeder wieder zur Ausgangsstellung zurück. Während dieser Rückstellung kratzt der Schreibstift 28 eine dem Kompressionsdruck entsprechende Schreibspur in die Wachsoberfläche des Aufzeichnungsblattes 8.

Wenn der Träger 7 zurückgestellt ist, kann die Sichtscheibe 12 wieder losgelassen werden, so daß der Schreibstift 28 in die gezeichnete Stellung hochgedrückt wird. Die Halterung 27 kann dann verstellt werden, so daß der Schreibstift 28 eine neue Lage für den nächsten Zylinder bezüglich der Meßwerkachse einnimmt. Danach kann der Kompressionsdruck des nächsten Zylinders registriert werden.

Mit der vorbeschriebenen Vorrichtung läßt sich in dem vorgesehenen Meßbereich von 1,5 bar bis 50 bar in dem für Benzinmotoren vorgesehenen Teilbereich von 1,5 bar bis 15 bar Güteklasse 0.6 und in dem für Dieselmotoren vorgesehenen Teilbereich von 16 bar bis 50 bar Güteklasse 1,0 ohne besondere Schwierigkeiten erreichen.

Es sind somit mit dem erfindungsgemäßen Kompressionsdruckschreiber in wenig aufwendiger Weise sehr genaue Registrierungen des Kompressionsdruckes bei Benzin- und Dieselmotoren mit einem einzigen Gerät möglich.

**Patentansprüche**

1. Verfahren zum Aufzeichnen des Kompressionsdruckes von Verbrennungsmotoren, bei dem ein Schreibstift und ein Aufzeichnungsblatt durch ein druckempfindliches Organ, insbesondere eine Bourdonfeder, relativ zueinander druckabhängig bewegt werden und während eines Teils der Bewegung in Berührung miteinander gebracht werden, dadurch gekennzeichnet, daß zuerst durch Beaufschlagung des Organs (2) mit dem Kompressionsdruck eines der beiden Aufzeichnungselemente (8, 28) aus seiner Ruhelage in die durch den Kompressionsdruck gegebene Maximallage verschwenkt wird, dann die beiden Aufzeichnungselemente (8, 28) miteinander in Berührung gebracht werden und schließlich durch Entlüften des Organs (2) das ausgelenkte Aufzeichnungselement (8; 28) unter Erzeugung einer Schreibspur in seine Ruhelage verschwenkt wird.

2. Verfahren nach Anspruch 1, dadurch gekennzeichnet, daß das Aufzeichnungsblatt (8) druckabhängig ausgelenkt wird.

3. Vorrichtung zur Ausübung des Verfahrens nach Anspruch 1 oder 2, mit einem Träger für das Aufzeichnungsblatt, einem auf das Aufzeichnungsblatt aufsetzbaren Schreibstift, der an einem Schreibarm angeordnet ist, und einem druckempfindlichen Organ, insbesondere einer Bourdonfeder, das mit dem Träger in Wirkverbindung steht, dadurch gekennzeichnet, daß der den Schreibstift (28) tragende Schreibarm an einer zum Schreibstift (28) achsparallel und gegen die Kraft einer Feder (25) verschiebbaren Stange (13) sitzt, die ein Kurvengleitstück (17) aufweist, und daß zum Entlüften des druckempfindlichen Organs (2) ein Ventil (16) vorhanden ist, dessen bewegliches Verschlußelement (20) durch das Kurvengleitstück (17) dergestalt betätigbar ist, daß das Ventil (16) beim Aufsetzen des Schreibstifts (28) auf das Aufzeichnungsblatt (8) in eine Entlüftungsstellung geschaltet ist.

4. Vorrichtung nach Anspruch 3, dadurch gekennzeichnet, daß der Träger (7) für das Aufzeichnungsblatt (8) aus einer drehbar gelagerten Scheibe besteht, die mit dem druckempfindlichen Organ (2) gekuppelt ist.

5. Vorrichtung nach Anspruch 4, mit einer Bourdonfeder, dadurch gekennzeichnet, daß die Bourdonfeder (2) mit einem Segmentwerk (4) gekuppelt ist, auf dessen Ausgangswelle (6) die Scheibe (7) sitzt.

6. Vorrichtung nach Anspruch 4 oder 5, dadurch gekennzeichnet, daß aus der Mitte der Scheibe (7) ein schlüsselförmiger Zapfen (9) hervorsteht, auf den ein mit einer Schlüsselöffnung (10) versehenes kreisförmiges Aufzeichnungsblatt (8) aufschiebbar ist.

7. Vorrichtung nach einem der Ansprüche 3 bis 6, dadurch gekennzeichnet, daß an einem Ende der Stange (13) Rastmittel (24) angeordnet sind, bei deren Lösen der Schreibstift (28) durch die Feder (25) in eine das Einlegen eines Aufzeichnungsblattes (8) erleichternde Position verfahrbar ist.

8. Vorrichtung nach einem der Ansprüche 3 bis 7, dadurch gekennzeichnet, daß der Schreibarm zum Einlegen des Aufzeichnungsblattes (8) von dem Träger (7) für das Aufzeichnungsblatt (8) wegschwenkbar ist.

9. Vorrichtung nach einem der Ansprüche 3 bis 8, dadurch gekennzeichnet, daß der Schreibstift (28) auf dem Schreibarm in mehrere Schreibstellungen verschiebbar ist.

10. Vorrichtung nach einem der Ansprüche bis 9, dadurch gekennzeichnet, daß der Träger (7) ringförmige Erhebungen (11) zwischen den Schreibstellungen des Schreibstifts (28) aufweist, auf denen das Aufzeichnungsblatt (8) aufliegt.

11. Vorrichtung nach einem der Ansprüche 3 bis 10, dadurch gekennzeichnet, daß der Schreibstift (28) am Schreibarm senkrecht zur Aufzeichnungsblattebene federnd gelagert ist.

12. Vorrichtung nach einem der Ansprüche 3 bis 11, dadurch gekennzeichnet, daß eine über dem Schreibarm angeordnete Sichtscheibe (12) fest mit dem Schreibarm verbunden ist.

13. Vorrichtung nach einem der Ansprüche 3 bis 11, dadurch gekennzeichnet, daß der Schreibarm durch ein in der Sichtscheibe (12) angeordnetes, radial verlaufendes Langloch (26) substituiert ist, in dem der Schreibstift (28) längsverschieblich gelagert ist.

## Claims

1. Process for recording the compression of internal combustion engines, in which a recording stylus and a recording sheet are moved relative to one another in a pressure-dependent manner by a pressure-sensitive member, especially a Bourdon tube, and are brought in contact with one another during a portion of the movement, characterised in that, firstly, by subjecting the member (2) to the compression one of the two recording elements (8, 28) is pivoted out of its position of rest into the maximum position given by the compression, then the two recording elements (8, 28) are brought in contact with one another and, finally, by venting the member (2) the deflected recording element (8; 28) is pivoted into its position of rest, at the same time producing a recording trace.

2. Process according to Claim 1, characterised in that the recording sheet (8) is deflected in a pressure-dependent manner.

3. Apparatus for applying the process according to Claim 1 or 2, with a support for the recording sheet, with a recording stylus which can be placed on the recording sheet and which is located on a recording arm, and with a pressure-sensitive member, especially a Bourdon tube, which is connected operatively to the support, characterised in that the recording arm supporting the recording stylus (28) rests on a rod (13) which is parallel to the axis of the recording stylus (28) and can be displaced against the force of a spring (25) and which has a curved sliding piece (17), and in that a valve (16) is provided for venting the pressure-sensitive member (2), and the movable closure element (20) of this valve can be actuated by the curved sliding piece (17) in such a way that, when the recording stylus (28) is placed on the recording sheet (8), the valve (16) is switched into a venting position.

4. Apparatus according to Claim 3, characterised in that the support (7) for the recording sheet (8) consists of a rotatably mounted disc which is coupled to the pressure-sensitive member (2).

5. Apparatus according to Claim 4, with a Bourdon tube, characterised in that the Bourdon tube (2) is coupled to a segmental mechanism (4), on the output shaft (6) of which sits the disc (7).

6. Apparatus according to Claim 4 or 5, characterised in that a key-shaped pin (9), onto which a circular recording sheet (8) provided with a keyhole (10) can be pushed, projects out of the centre of the disc (7).

7. Apparatus according to one of Claims 3 to 6, characterised in that locking means (24) are located at one end of the rod (13), and when these are released the recording stylus (28) can be moved by the spring (25) into a position making it easier to insert a recording sheet (8).

8. Apparatus according to one of Claims 3 to 7, characterised in that, for inserting the recording sheet (8), the recording arm can be pivoted away from the support (7) for the recording sheet (8).

9. Apparatus according to one of Claims 3 to 8, characterised in that the recording stylus (28) on the recording arm can be moved into several recording positions.

10. Apparatus according to one of Claims 1 to 9, characterised in that the support (7) has between the recording positions of the recording stylus (28) annular elevations (11) on which the recording sheet (8) rests.

11. Apparatus according to one of Claims 3 to 10, characterised in that the recording stylus (28) is mounted resiliently on the recording arm perpendicularly to the plane of the recording sheet.

12. Apparatus according to one of Claims 3 to 11, characterised in that an inspection window (12) located above the recording arm is connected fixedly to the recording arm.

13. Apparatus according to one of Claims 3 to 11, characterised in that the recording arm is replaced by a radially extending slot (26) which is located in the inspection window (12) and in which the recording stylus (28) is mounted so as to be longitudinally displaceable.

## Revendications

1. Procédé d'enregistrement de la pression de compression de moteurs à combustion interne, dans lequel un stylet d'inscription et un disque d'enregistrement sont déplacés l'un par rapport à l'autre en fonction de la pression, par un organe sensible à la pression, en particulier un manomètre de Bourdon, et sont amenés au contact l'un de l'autre pendant une partie de leur déplacement, procédé caractérisé par le fait que l'un des deux éléments d'enregistrement (8, 28) est tout d'abord déplacé par pivotement de sa position de repos à sa position maximale déterminée par la pression de compression, par suite d'une sollicitation par la pression de compression dudit organe (2), après quoi ces deux éléments d'enregistrement (8, 28) sont amenés au contact l'un de l'autre, l'élément d'enregistrement déplacé (8, 28) étant enfin, par suite d'une évacuation de l'air présent dans l'organe (2), déplacé par pivotement à sa position de repos en traçant une courbe.

6

2. Procédé selon la revendication 1, caractérisé par le fait que le disque d'enregistrement (8) pivote en fonction de la pression.

3. Dispositif pour la mise en œuvre du procédé selon l'une des revendications 1 et 2, comprenant un support du disque d'enregistrement, un stylet d'inscription qui, pouvant être disposé sur ledit disque d'enregistrement, est monté sur un bras d'inscription, ainsi qu'un organe sensible à la pression, en particulier un manomètre de Bourdon, en liaison efficace avec ledit support, dispositif caractérisé par le fait que ledit bras d'inscription supportant ledit stylet (28) est monté sur une tige (13) qui, parallèle à l'axe du stylet (28) et mobile à l'encontre de l'action d'un ressort (25), comporte une came curviligne (17); et par le fait que, pour évacuer l'air renfermé par l'organe (2) sensible à la pression, il est prévu une soupape (16) dont l'obturateur mobile (20) peut être actionné par la came curviligne (17), de telle sorte que la soupape (16) puisse être commutée à une position d'évacuation lorsque le stylet d'inscription (28) est appliqué sur ledit disque d'enregistrement (8).

4. Dispositif selon la revendication 3, caractérisé par le fait que le support (7) du disque d'enregistrement (8) consiste en un disque monté rotatif et relié à l'organe (2) sensible à la pression.

5. Dispositif selon la revendication 4, équipé d'un manomètre de Bourdon, caractérisé par le fait que ledit manomètre de Bourdon (2) est accouplé à un mécanisme (4) à secteur denté, sur l'arbre de sortie (6) duquel le disque (7) est calé.

6. Dispositif selon l'une des revendications 4 et 5, caractérisé par le fait que, au-delà du centre du disque (7) fait saillie un goujon claviforme (9), sur lequel peut être emboîté un disque circulaire d'enregistrement (8) percé d'une ouverture (10) en forme de trou de serrure.

7. Dispositif selon l'une quelconque des revendications 3 à 6, caractérisé par le fait que, à une extrémité de la tige (13), se trouvent des organes d'encliquetage (24), dont le déblocage permet au stylet d'inscription (28) d'être déplacé par le ressort (25) à une position facilitant la mise en place d'un disque d'enregistrement (8).

8. Dispositif selon l'une quelconque des revendications 3 à 7, caractérisé par le fait que, pour mettre en place le disque d'enregistrement (8), le bras d'inscription peut être déplacé par pivotement à l'écart du support (7) du disque d'enregistrement (8).

9. Dispositif selon l'une quelconque des revendications 3 à 8, caractérisé par le fait que le stylet d'inscription (28) peut être déplacé à plusieurs positions d'inscription sur le bras d'inscription.

10. Dispositif selon l'une quelconque des revendications 3 à 9, caractérisé par le fait que le support (7) comporte, entre les positions d'inscription du stylet (28), des protubérances annulaires (11) sur lesquelles le disque d'enregistrement (8) repose.

11. Dispositif selon l'une quelconque des revendications 3 à 10, caractérisé par le fait que le stylet d'inscription (28) est monté élastiquement sur le bras d'inscription perpendiculairement au plan du disque d'enregistrement.

12. Dispositif selon l'une quelconque des revendications 3 à 11, caractérisé par le fait qu'un disque transparent (12), placé au-dessus du bras d'inscription, est assujetti à ce dernier.

13. Dispositif selon l'une quelconque des revendications 3 à 11, caractérisé par le fait que le bras d'inscription est remplacé par une fenêtre (26) orientée radialement, ménagée dans le disque transparent (12) et dans laquelle le stylet d'inscription (28) est mobile longitudinalement.

FIG.1

FIG.2

FIG.3

FIG.4